# EUROPEAN PATENT APPLICATION

(11) **EP 2 278 540 A1**
(43) Date of publication of application: **26.01.2011**
(21) Application number: 09754903.4
(22) Date of filing: 30.03.2009
(51) Int. Cl.: G06Q 30/00

(54) **METHOD AND SYSTEM FOR ADVERTISEMENT OF MAP USING VIRTUAL POI (POINT OF INTEREST)**

(30) Priority: 31.03.2008 KR 20080030034
(71) Applicant: Thinkwaresystems Corp., Seoul 151-800 (KR)
(72) Inventor: HAN, Jong Kook, Seoul 138-845 (KR)
(74) Representative: Cabinet Plasseraud
(86) International application number: PCT/KR2009/001616
(87) International publication number: WO 2009/145438

(57) **Abstract**

An advertisement method and a system of a map using a virtual POI are disclosed. An advertisement system of a map using a virtual POI according to one embodiment of the present invention comprises a map database including map data; a membership database including advertisement display configuration information; a virtual POI database where stored are information about virtual advertisement POI and advertisement location which is the location of the virtual advertisement POI; and a virtual world generation module, generating an image map based on the map data and searching the image map for a virtual advertisement POI associated with a location which can be displayed on the image map and corresponding to the advertisement display configuration information; and displaying the virtual advertisement POI on the advertisement location of the image map.

## Description

### Technical Field

The present invention relates to an advertisement method and a system of a map using virtual point of interest (POI).

### Background Art

As network-related technology advances, communication among people is accordingly made on a network in many cases. In most cases, communication is made among people sharing a common topic for conversation. If the common topic is related to writing (novel, essay, history, etc.) or video (movie, animation, etc.) which has nothing to do with a place, a place has no significance whereas if the topic is associated with particular places such as best restaurants, clothing stores, fortune tellers, and the like, location of the place affects communication among people. Therefore, knowing the location of a place in common interest is important.

### Technical Problem

As described above, it is necessary to know the location of a place in common interest. At present, however, since he or she should search blogs or cafes for posts related to a region or a topic of his or her interest and check each post from the search result, in practice, there is no way of knowing what the place the other people have an interest in is like as well as telling the other people about what the place he or she has an interest in is like.

Also, conventional advertisement usually displays only the contents to be advertised. Therefore, if a person tries to purchase the advertised item after seeing the corresponding advertisement and the advertised item is a commodity dealt with only in a particular shopping center (e.g., specific brand and specific brand shop), the person has to deliberately search for the location of the shopping center which sells the advertised item.

### Technical Solution

To resolve the above technical problem, an advertisement system of a map using a virtual POI according to one embodiment of the present invention comprises a map database including map data; a membership database including advertisement display configuration information; a virtual POI database where stored are information about virtual advertisement POI and advertisement location which is the location of the virtual advertisement POI; and a virtual world generation module, generating an image map based on the map data and searching the image map for a virtual advertisement POI associated with a location which can be displayed on the image map and corresponding to the advertisement display configuration information; and displaying the virtual advertisement POI on the advertisement location of the image map.

Also, according to one aspect of the present invention, the virtual world generation module can display the virtual advertisement POI on the image map in such a way that the virtual advertisement POI includes the advertisement contents.

In addition, according to one aspect of the present invention, the virtual world generation module can search for the virtual advertisement POI corresponding to conditions specifying a particular company or an advertisement of a particular field received; and display only the virtual advertisement POI corresponding to conditions designating the particular company or the advertisement of the particular field on the image map.

Moreover, according to one aspect of the present invention, the membership database can further comprise member pages in which contents for selling avatar-related commodities are included; and the contents for selling the avatar-related commodities can provide items for an avatar of a member displayed on the member page and the item for an avatar can be formed in a shape to include advertisement contents.

Further, an advertisement method of a map using a virtual POI according to one embodiment of the present invention comprises checking advertisement display configuration information; searching for a virtual advertisement POI associated with a location displayed on an image map generated based on map data; and displaying the virtual advertisement POI on an advertisement location of the image map.

### Advantageous Effects

A contents processing method according to one embodiment of the present invention allows the user to convert contents preventing initially the user from direct conversion into a desired shape on a map utilizing a virtual POI and to use the converted contents; at the same time, other users can receive contents in the shape requested by the users and thus generate an advertisement effect about the contents.

### Brief Description of the Drawings

The accompanying drawings, which are included to provide a further understanding of this document and are incorporated to constitute a part of this specification, illustrate embodiments of this document and together with the description serve to explain the principles of this document.

FIG. 1 is a block diagram of an advertisement system of a map using a virtual POI according to one embodiment of the present invention;

FIG. 2 illustrates one example of a map using a virtual advertisement POI according to one embodiment of the present invention;

FIG. 3 is a flow chart illustrating an advertisement method of a map using a virtual POI according to one embodiment of the present invention;

FIG. 4 illustrates one example of information change displayed on a terminal during advertisement of a map using a virtual POI;

FIG. 5 illustrates one example of information change displayed on a terminal during execution of an avatar shop; and

FIG. 6 is a flow chart of a contents processing method according to one embodiment of the present invention.

### Best Mode of Carrying Out the Invention

In the following, various embodiments will be described in detail according to the present invention with reference to appended drawings.

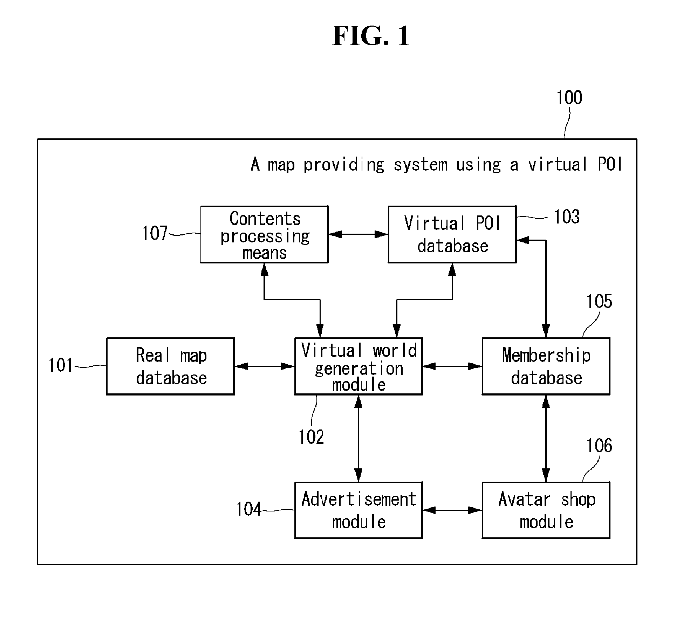

FIG. 1 is a block diagram of an advertisement system of a map using a virtual POI according to one embodiment of the present invention.

A real map database 101 transmits map data including attribute data associated with real-world geographic data to a virtual world generation module 102; the virtual world generation module 102 generates a real image map based on map data received. The virtual world generation module 102 receives virtual POIs associated with a real image map from the virtual POI database 103 and receives virtual advertisement POIs associated with a real image map from an advertisement module 104; the virtual world generation module 102 then sets the virtual POI and the virtual advertisement POI to correspond to a particular location of the real image map and transmits the virtual POI and the virtual advertisement POI to a terminal.

At this time, if the virtual world generation module 102 receives conditions to designate an advertisement company to be displayed on a map which uses a virtual POI, the virtual world generation module 102 searches the advertisement POIs corresponding to the conditions for designating a received advertisement company and displays only the virtual advertisement POI which satisfies the conditions designating an advertisement of the specific company or the specific field on the image map.

The advertisement system of a map using a virtual POI further comprises a membership database 105 storing member information of the user who has subscribed to a map providing system 100 using a virtual POI, a member page used by the user, and advertisement display configuration information set by the user; the virtual world generation module 102 can display on the image map only the virtual advertisement POI corresponding to the advertisement display configuration information stored in the membership database 105.

The advertisement display configuration information is information about the virtual advertisement POI displayed on a map using a virtual POI and can include a list of the virtual advertisement POIs displayed as fundamental items on a map using a virtual POI as the user approves display of the virtual advertisement POIs on the map using a virtual POI in accordance with compensation of an advertisement company.

The member page can comprise a profile of a member, an avatar of the member, and an avatar shop which sells items used for the avatar. The avatar shop can sell avatar items stored in an avatar shop module 106. The avatar item can display a brand name or advertisement contents of an advertiser and the avatar item can be formed to have the shape of an item to be advertised. The avatar item can be provided for free so that many users can use it.

The virtual POI database 103 can store more than one from among shape information of a virtual POI displayed on a terminal, description information about a place of the user's interest indicated by the virtual POI, link information about a page to be displayed when a virtual POI is selected, information about whether to open the virtual POI to the other users, and location information with which the virtual POI is associated. A virtual POI stored in the virtual POI database 103 can include a virtual advertisement POI for which "a page to be displayed when the virtual POI is selected or link information directing to the corresponding contents" has been set so that when a virtual POI is selected, a page or contents associated with an advertisement can be executed. The advertisement module 104 can store more one or more from among an advertisement page to be displayed when a virtual advertisement POI is selected, information displayed in the advertisement page, contents, and advertisement contents to be displayed when the virtual advertisement POI is selected. An advertisement location, which is location information corresponding to the virtual advertisement POI, can be the location of a shop providing commodities advertised. An advertisement page can include one or more from among an avatar shop selling commodities including advertisement contents, advertisement contents, events for advertisement, compensation for executing the advertisement page, and the number of people who visited the advertisement page.

The virtual POI database 103 can further comprise a virtual contents processing POI which receives a contents idea and creates contents information. A contents processing page linked to the virtual contents processing POI includes an input window for receiving an idea and a contents providing window which provides contents completed according to the idea. The contents processing page provides creative ideas for a professional writer, a lyricist, and a composer if the ideas such as a novel, a lyric, and a composition are received through the input window; a novel, a lyric, and a music completed according to the provided ideas can be provided for the other users to download them. If a song is input to the input window, a contents processing means 107 can convert the input song to ringtones or colorings and provide the converted song.

### Mode for Embodiment of the Invention

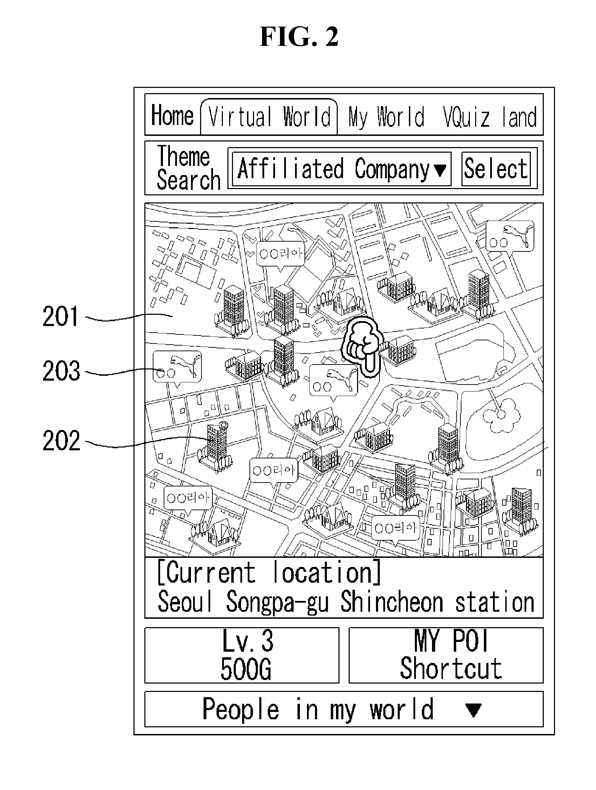

FIG. 2 illustrates one example of a map using a virtual advertisement POI according to one embodiment of the present invention.

With reference to FIG. 2, a map providing system 100 using a virtual POI according to one embodiment of the present invention displays, on a map 201 about a region of the user's interest, virtual POIs 202 of the user and the other users whose virtual POIs have been set to be open; and a virtual advertisement POI 203 corresponding to the advertisement display configuration information. Therefore, the map providing system 100 using a virtual POI according to one embodiment of the present invention enables the user to check the location of his or her interest and obtain information about a specific location made by the other users' experience since the user can obtain the information about a location in which the other users have an interest; and at the same time, advertise the location of a shop where a particular commodity can be purchased while advertising the particular commodity.

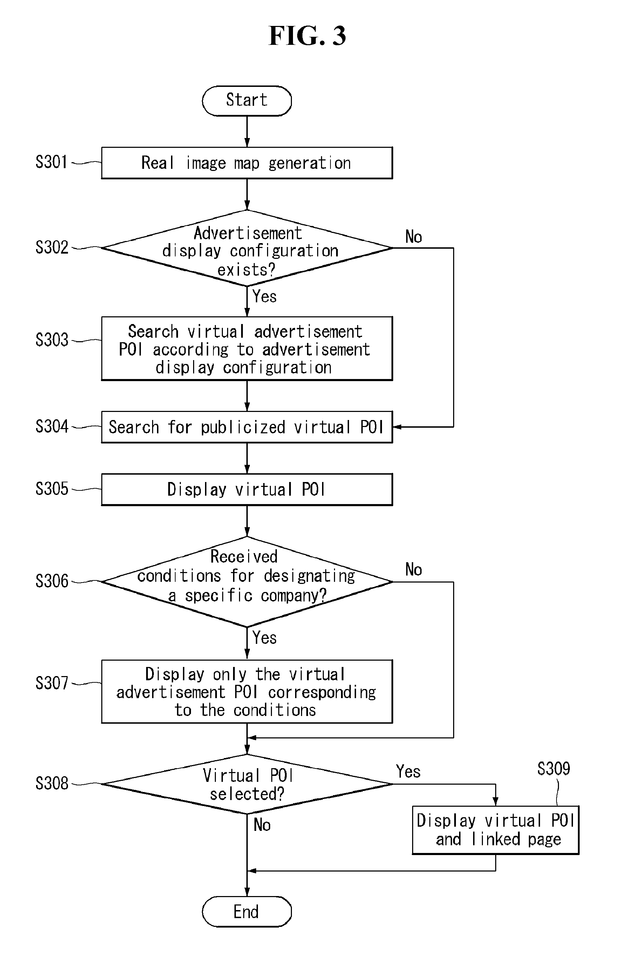

FIG. 3 is a flow chart illustrating an advertisement method of a map using a virtual POI according to one embodiment of the present invention.

At S301 step, the virtual world generation module 102 generates an image map based on map data stored in a real map database 101. The map data stored in the real map database 101 include actual geographic information and attribute data associated with the actual geographic information and allows the user to check by using the generated image map whether moving to a location of the user's interest is possible in a real environment.

At S302 step, the virtual world generation module 102 checks whether an advertisement setting is stored in the membership database 105. If the advertisement setting is not stored, the virtual world generation module 102 determines that the virtual advertisement POI, which is a basic display item, does not exist and prevents the virtual advertisement POI from being displayed on the initial screen of a map using a virtual POI.

At S303 step, the virtual world generation module 102 searches virtual advertisement POIs for a virtual advertisement POI corresponding to the advertisement display configuration. At this time, the virtual world generation module 102 searches the virtual POIs which can be displayed on the image map for the virtual advertisement POI and within the virtual advertisement POIs found, searches for the virtual advertisement POI corresponding to the advertisement display configuration.

At S304 step, the virtual world generation module 102 searches virtual POIs which can be displayed on the image map for virtual POIs of the user and the other users whose virtual POIs have been set to be open. The virtual POI of the other users set to be open is the one where "information about whether to open the virtual POI for the other users" is set as open; the virtual POI of the other users set to be closed is not displayed and thus security of secret virtual POIs which the other users do not want to open can be ensured.

At S305 step, the virtual world generation module 102 receives from the virtual POI database 103 information about the virtual POI found at the steps of S303 and S304; and creates a "map using a virtual POI" displaying virtual POIs at the locations corresponding to the virtual POIs of an image map created at S301 step and provides the map using a virtual POI for a terminal. At this time, the information about a virtual POI received can comprise at least one from among shape information of a virtual POI displayed on a terminal, description information about a place of the user's interest indicated by the virtual POI, link information about a page to be displayed when a virtual POI is selected, information about whether to open the virtual POI to the other users, and location information with which the virtual POI is associated.

At S306 step, the virtual world generation module 102 checks if conditions to designate specific companies to be displayed on the image map have been received from the terminal. The virtual world generation module 102, by receiving conditions to designate specific companies and allowing only the virtual advertisement POIs which correspond to the specific companies or specific conditions to be displayed on a map using a virtual POI, advertises locations where advertised items corresponding to the specific companies or conditions are dealt with. The above conditions for designating specific companies can be those for selecting companies providing specific themes among advertising companies, those for selecting only the virtual advertisement POIs designated by specific advertisers, or those for selecting part or all of virtual advertisement POIs registered by the advertisement display configuration.

At S307 step, the virtual world generation module 102 searches the virtual POIs for virtual advertisement POIs which correspond to the conditions for designating the specific companies received from the S306 step, displays only the virtual advertisement POIs corresponding to the conditions for designating the specific companies on a map using a virtual POI generated at the S305 step, and provides those virtual advertisement POIs for a terminal.

At S308 step, the virtual world generation module 102 selects a virtual POI on a map using a virtual POI according to an input from the terminal. Selection can be made in such a way that only the virtual POI is selected by using a moving mark or a virtual POI is selected to be executed as a mark moving freely across a map using a virtual POI is stopped at the virtual POI like a cursor operated by a mouse. A virtual POI can be selected if a mark stops at the virtual POI; or selection can be made as a mark executes another menu at the virtual POI. At this time, a terminal can make a request on the virtual world generation module 102 to select a virtual POI selected by the user from among virtual POIs displayed on a "map using a virtual POI" provided from S305 and S307 steps.

At S309 step, the virtual world generation module 102 displays a member page linked to a virtual POI selected at S308 step. At this time, the virtual world generation module 102 checks information about the selected virtual POI and from among information about the selected virtual POI, allows a member page corresponding to "link information about a page to be displayed if a virtual POI is selected" to be displayed. If the selected virtual POI is a virtual advertisement POI, the virtual world generation module 102 can display an advertisement page or advertisement contents corresponding to "link information about a page or contents to be displayed if a virtual POI is selected".

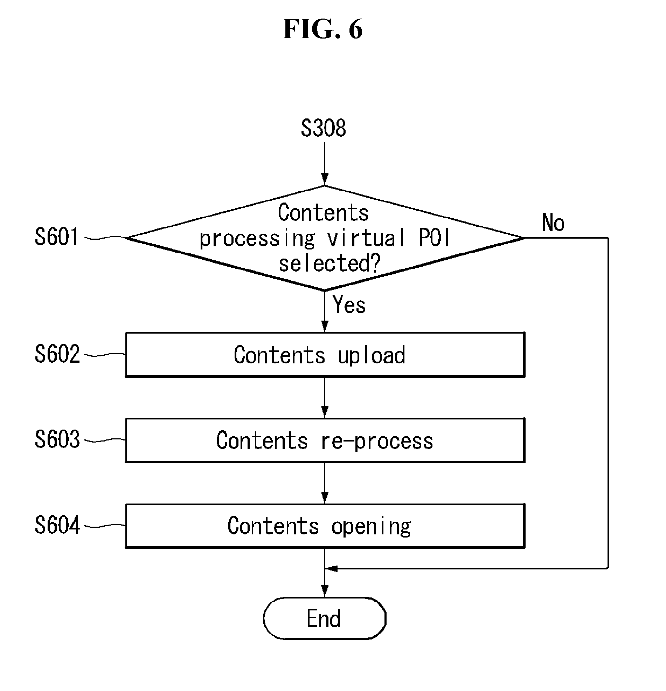

An advertisement method of a map using a virtual POI as described above will be described in more detail through an example illustrated in FIG. 6.

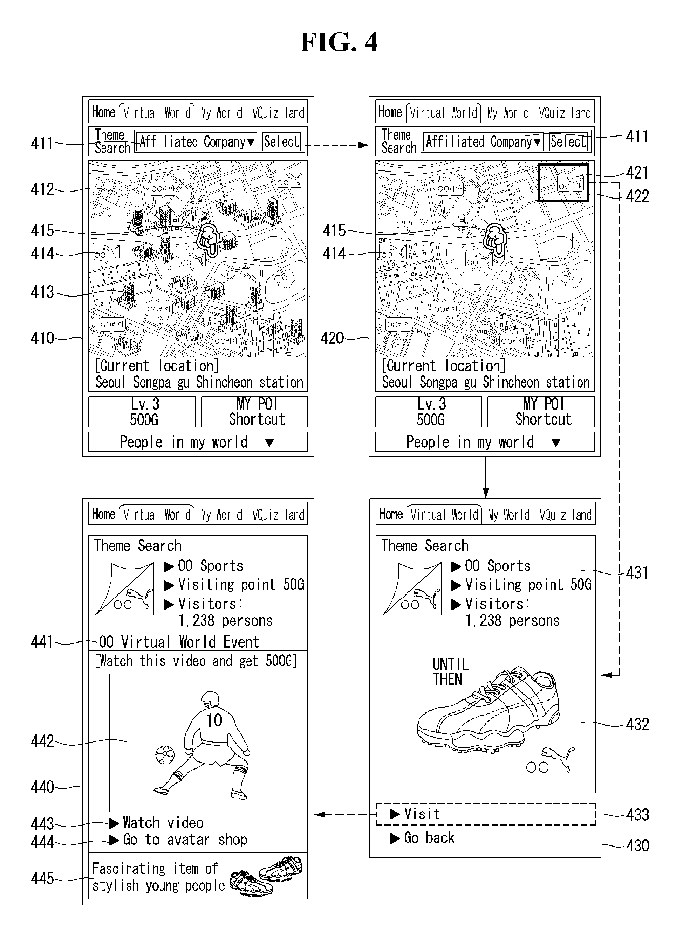

FIG. 4 illustrates one example of information change displayed on a terminal during advertisement of a map using a virtual POI.

The virtual world generation module 102 displays a theme search window 411 for receiving theme information and an image map 412; and creates a map 410 using a virtual POI where a virtual POI 413 and a virtual advertisement POI 414 are displayed and provides the map for the terminal. At this time, the virtual world generation module 102 can display a cursor on the image map 412, with which a virtual POI 413 and a virtual advertisement POI 414 can be selected.

If a theme is entered into the theme search window 411, the virtual world generation module 102 creates a map 420 using a virtual POI where displayed are only those virtual POIs 413 and virtual advertisement POIs 414 having the same theme as the above theme from among virtual POIs 413 and virtual advertisement POIs 414 displayed on the map 410 using a virtual POI; and provides the map 420 for the terminal. FIG. 4 assumes the theme to be an affiliated company and therefore, displayed is a virtual advertisement POI 414 of an affiliated company included in the advertisement display configuration information set by the user.

The virtual world generation module 102 can select a virtual advertisement POI 414 on a map 410, 420 using a virtual POI by moving a cursor 415 according to the request of a terminal. At this time, the virtual world generation module 102 displays a mark 422 indicating a selected virtual advertisement POI around the selected virtual advertisement POI 421 and among information of the selected virtual advertisement POI 421, displays an external advertisement page 430 corresponding to "link information about a page or contents to be displayed if a virtual POI is selected".

At this time, the external advertisement page 430 displayed comprises one or more from among an information window 431 including one or more from among a name of a company to be advertised, a manufacturer name of a commodity to be advertised, compensation for visiting an internal advertisement page, and information about the number of visitors; an advertisement contents window 432 including advertisement contents; and a link 433 for the internal advertisement page.

If a link 433 to an internal advertisement page is selected, the internal advertisement page 440 displayed can comprise one or more of a description window 441 about an event intended for the users who visited the internal advertisement page 440, an event window 442 where the event is under way, an execution icon 443 which performs the event, an avatar shop which sells items for an advertising avatar, and contents 445 including advertisement contents. At this time, the event performed in the event window 442 can be advertisement contents which should be played for a predetermined time. An item for an advertising avatar sold in the avatar shop 444 can be the one having the shape of an advertisement object or the one including advertisement contents. The item for an advertising avatar can be provided free of charge for the users visiting the internal advertisement page.

Thus, by using an advertisement method of a map using a virtual POI according to one embodiment of the present invention, location of a shop at which the user can obtain an advertising item can be provided as virtual advertisement POIs are displayed on an image map built based on an actual map.

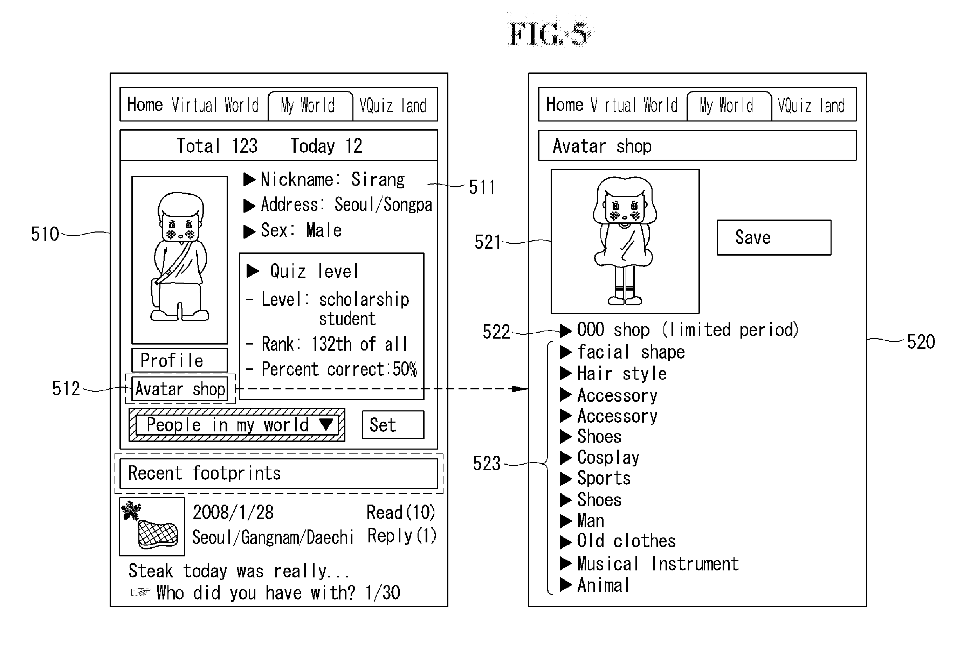

FIG. 5 illustrates one example of information change displayed on a terminal during execution of an avatar shop.

If a virtual POI of the user is selected at S308 step, the virtual world generation module 102, at S309 step, provides a member profile 511 and a member page including an avatar shop execution mark for a terminal. At this time, if the avatar shop execution mark 512 is selected, the virtual world generation module 102 provides an avatar shop page 520 for the terminal, the avatar shop page 520 including one or more from among an avatar 521, a special event commodity sales shop 522, and an item sales shop 523 which sells items applicable to the avatar. The avatar shop page can be displayed linked in the internal advertisement page 440 as well as in the member page 510. However, if the avatar shop page is linked in the internal advertisement page 440, too, only the avatar items related to the contents advertised in the internal advertisement page 440 can be provided.

The special event commodity sales shop 522 displays avatar items during a limited period or avatar items provided only when an event in the internal advertisement page 440 is performed; and can provide avatar items selected by the user from among displayed avatar items.

The item sales shop 523 provides items changing the shape of the avatar, items wearable for the avatar, and items used for the setting of the avatar; the wearable item for the avatar and the item for the setting of the avatar can take the shape of an advertising commodity or can be created to include the advertising contents. The items changing the shape of the avatar can be those which change the avatar into a product shape having an appearance of a particular person. At this time, avatar items provided by the item sales shop 523 can be free of charge so that many users can use the avatar items for their avatars.

As described above, if an avatar shop according to one embodiment of the present invention is employed, since the avatar of the user for which avatar items including advertisement contents have been applied are displayed in the member page, advertisement contents can be publicized to the users who visit the member page and watch the avatar.

FIG. 6 is a flow chart of a contents processing method according to one embodiment of the present invention.

At S601 step, the virtual world generation module 102 checks whether a virtual POI selected at S308 step is a contents processing virtual POI. The virtual world generation module 102 checks information about the selected virtual POI and if, from information about the selected virtual POI, "link information for a page to be displayed when a virtual POI is selected" is found to correspond to a contents processing page, determines that the selected virtual POI is a contents processing virtual POI.

At S602 step, the virtual world generation module 102 displays a contents processing page corresponding to the contents processing virtual POI selected at the S601 step; the contents processing page receives contents to be processed and information about a format in which the contents are to be changed. The contents processing page can include an input window for receiving an idea and a contents providing window which provides contents completed according to the idea. At this time, information entered into the input window can include information about a song and how the song is wanted to be processed.

At S603 step, the virtual world generation module 102 changes the contents input at the S602 step according to the information about a format. The virtual world generation module 102, if a song is input at the S602 step, can reprocess the input song into a ringtone or a coloring.

The virtual world generation module 102 at S604 step opens the contents changed at the S603 step and thus allows the user or the other users to download the changed contents. At this time, the virtual world generation module 102 can provide the re-processed contents into the contents providing window.

As described above, if a contents processing method according to one embodiment of the present invention is employed, contents not directly converted by the user can be used after being converted in a desired form on a map using a virtual POI; at the same time, other users can be provided with the contents in the form desired by the user, achieving a publicity effect about the contents.

Embodiments according to the present invention can be recorded in a computer-readable medium, being implemented in the form of a program command executable through various computer means. The computer-readable medium can include program commands, file data, data structure, and so on individually or in combination thereof. The program commands recorded in the medium can be those specially designed and configured for the present invention or those well-known for those skilled in the computer software field. Examples of a computer-readable medium include magnetic media such as a hard disk, floppy disk, and a magnetic tape; optical media such as CD-ROM and DVD; magneto-optical medium such as a floptical disk; and a hardware device specially configured to store and execute program commands such as ROM, RAM, and flash memory. Examples of a program command include high level language codes executable in a computer by using an interpreter as well as assembly codes generated by a compiler. The hardware device can be configured to function as one or more software modules for carrying out the operation of the present invention, and vice versa.

Although the present invention has been described through particular points such as specific components and several embodiments and drawings, the description above is intended to provide an overall understanding of the present invention and the present invention is not limited to the embodiments above. Therefore, it should also be understood that those skilled in the art will be able to make various modifications and variations from the description above.

Accordingly, the spirit and the scope of the present invention should not be limited to the aforementioned embodiments; not only the appended claims but also equivalent modification thereof should be understood to belong to the scope of the principles of the present invention.

### Industrial Applicability

The present invention provides a theme-based search method and a system on a map using a virtual POI, which displays virtual advertisement POIs on an image map generated based on an actual map and thus provides locations of shops where the users can be provided with advertising commodities.

The present invention provides an advertisement method and a system on a map using a virtual POI, where, if a virtual advertisement POI displayed on a map is selected, advertisement contents or an advertisement page is provided for advertisement and compensation for selecting a virtual advertisement POI is provided, thereby motivating the user to see the advertisement.

The present invention provides an advertisement method and a system on a map using a virtual POI, where avatar items for the user displayed on a member page are provided in such a way to include advertisement contents and thus, the advertisement contents are displayed for the users visiting the member page and watching the avatar.

## Claims

1. An advertisement system of a map using a virtual POI, comprising:
a map database including map data;
a membership database including advertisement display configuration information;
a virtual POI database where stored are information about virtual advertisement POI and advertisement location which is the location of the virtual advertisement POI; and
a virtual world generation module, generating an image map based on the map data and searching the image map for a virtual advertisement POI associated with a location which can be displayed on the image map and
corresponding to the advertisement display configuration information; and displaying the virtual advertisement POI on the advertisement location of the image map.

2. The system of claim 1, wherein the virtual world generation module displays the virtual advertisement POI on the image map in such a way that the virtual advertisement POI includes advertisement contents.

3. The system of claim 1, wherein the virtual POI database is associated with location displayed on an image map and further stores information about a virtual POI corresponding to a location of the user's interest and the location of interest; and the virtual world generation module further displays a virtual POI at the location of interest on the image map.

4. The system of claim 1, wherein the virtual world generation module searches for the virtual advertisement POI corresponding to conditions specifying a particular company or an advertisement of a particular field received; and displays the virtual advertisement POI corresponding to conditions specifying the particular company or the advertisement of the particular field on the image map.

5. The system of claim 1, wherein, if the virtual advertisement POI is selected, the virtual world generation module displays contents linked to the virtual advertisement POI.

6. The system of claim 1, wherein the membership database further includes member pages including contents providing avatar-related commodities.

7. The system of claim 6, wherein the contents for selling avatar-related commodities provide avatar items used for an avatar of a member displayed on the member page and the avatar item is formed in a shape to include advertisement contents.

8. An advertisement method of a map using a virtual POI, comprising:
checking advertisement display configuration information;
searching for a virtual advertisement POI associated with a location displayed on an image map generated based on map data; and
displaying the virtual advertisement POI on an advertisement location of the image map.

9. The method of claim 8, wherein the displaying the virtual advertisement POI displays the virtual advertisement POI on the image map in a shape to include advertisement contents.

10. The method of claim 8, further comprising searching for a virtual POI associated with a location displayed on the image map and corresponding to a location of the user's interest; and
the displaying the virtual advertisement POI further displaying a virtual POI at a location of interest on the image map.

11. The method of claim 8, further comprising:
if conditions designating advertisement of a specific company or a specific field are received, searching the virtual advertisement POIs displayed in the displaying the virtual advertisement POI for the virtual advertisement POIs corresponding to conditions designating the advertisement of the specific company or the specific field; and
displaying the virtual advertisement POIs corresponding to conditions designating the advertisement of the specific company or the specific field on the image map.

12. The method of claim 8, further comprising displaying contents linked to the virtual advertisement POI if the virtual advertisement POI displayed at the advertisement location of the image map is selected.

13. The method of claim 8, further comprising executing a member subscription process of the user and generating a member page including contents providing avatar-related commodities.

14. The method of claim 13, wherein the contents for selling avatar-related commodities provide avatar items used for an avatar of a member displayed on the member page and the avatar item is formed in a shape to include advertisement contents.

15. A computer-readable recording medium recording programs for performing a method from among claims 8 to 14.
